(19)

Europäisches
Patentamt
European
Patent Office
Office européen
des brevets

(11)  **EP 4 218 003 B1**

(12)  **EUROPEAN PATENT SPECIFICATION**

(45) Date of publication and mention
of the grant of the patent:
**10.01.2024  Bulletin 2024/02**

(51) International Patent Classification (IPC):
*G10K 9/22* (2006.01)   *H04R 1/02* (2006.01)
*H04R 1/28* (2006.01)   *G01S 7/521* (2006.01)
*G01S 15/931* (2020.01)

(21) Application number: **21755492.2**

(22) Date of filing: **05.08.2021**

(52) Cooperative Patent Classification (CPC):
**G10K 9/22; G01S 7/521; G01S 15/931;**
**H04R 1/2884;** G01S 2015/938; H04R 1/021

(86) International application number:
**PCT/EP2021/071904**

(87) International publication number:
**WO 2022/135754 (30.06.2022 Gazette 2022/26)**

(54)  **HOUSING FOR AN ULTRASONIC TRANSDUCER; ULTRASONIC TRANSDUCER AND METHODS FOR DESIGNING AND MANUFACTURING SUCH**

GEHÄUSE FÜR EINEN ULTRASCHALLWANDLER, ULTRASCHALLWANDLER UND VERFAHREN ZUM ENTWURF UND ZUR HERSTELLUNG DESSELBEN

BOÎTIER POUR UN TRANSDUCTEUR ULTRASONIQUE, TRANSDUCTEUR ULTRASONIQUE ET SES PROCÉDÉS DE CONCEPTION ET DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **23.12.2020  EP 20216946**

(43) Date of publication of application:
**02.08.2023  Bulletin 2023/31**

(73) Proprietor: **Elmos Semiconductor SE**
**44227 Dortmund (DE)**

(72) Inventors:
• **WU, Nai Chang**
**320014 Taoyuan City (TW)**
• **LI, I Chan**
**235031 New Taipei City (TW)**
• **KAO, Ming Yang**
**235008 New Taipeh City (TW)**
• **LIN, Hung Mou**
**557013 Zhushan Township, Nantou County (TW)**

(74) Representative: **Tautz & Schuhmacher**
**Nibelungenstraße 84**
**80639 München (DE)**

(56) References cited:
**DE-A1-102006 028 211     DE-A1-102013 211 630**
**US-A- 6 094 402**

**Description**

Embodiments of the invention relate to a housing for an ultrasonic transducer, an ultrasonic transducer, a vehicle, a use of an enhancement structure for a housing, and methods for designing and manufacturing an ultrasonic transducer. The embodiments are, thus, related to the field of ultrasonic transducers, in particular for automotive applications, such as driving assistance and park distance control applications.

Ultrasonic transducers are known in the prior art and are often used for automotive applications related to parking assistance system and distance control and other driver assistance applications. These applications are typically based on one or more ultrasonic transducers emitting ultrasonic waves, which are at least partly reflected by an object possibly arranged in an area of detection of the respective ultrasonic transducer, and typically received by the same ultrasonic transducer. An ultrasonic transducer therefore may have the function of an emitter and also the function of a receiver. Information about the presence and the optional distance of an object may be extracted based on the runtime and the amplitude of the received ultrasonic waves.

Ultrasonic transducers typically comprise a cup-shaped housing having a bottom wall and an essentially cylindrical side wall, which together form a hollow void within the housing. An oscillation generator is attached to an inner side of a bottom wall of the housing and configured to excite oscillations of the bottom wall, which, thus, acts as an oscillation membrane. The cup-shaped housing is typically manufactured as a single piece made of aluminum. The oscillation generator may be attached to the bottom wall by an attachment structure to influence the oscillatory behavior of the ultrasonic transducer. Moreover, ultrasonic transducers are known having an altered bottom wall to adjust the oscillatory behavior of the ultrasonic transducer. Such ultrasonic transducers are described for example in the documents DE 10 2015 015 900 B3, DE 10 2015 015 901 B3 and DE 10 2015 015 903 B3.

DE 10 2006 028211 A1 describes an ultrasonic sensor having a membrane and a cylindrical sidewall. The sensor further comprises an additional element having a stabilizing and/or attenuating effect. DE 10 2013 211630 A1 describes an electroacoustic transducer having a membrane attached to a housing, wherein the housing has a reduced thickness in the vicinity of the membrane. US 6 094 402 A describes an ultrasonic transducer having a ridge extending over a diaphragm and decoupling the diaphragm from the remains of a housing in order to achieve desired oscillation characteristics and to form a focused beam.

The object of the invention relates to providing ultrasonic transducers having higher flexibility regarding their tunability and methods for adjusting the characteristics of ultrasonic transducers.

This problem is solved by a housing for an ultrasonic transducer, an ultrasonic transducer, a vehicle, a use of an enhancement structure for a housing, and methods for designing and manufacturing an ultrasonic transducer having the features of the respective independent claim. Preferred embodiments are provided in the dependent claims and the description.

The invention relates to a housing for an ultrasonic transducer. The housing comprises a bottom wall, which is adapted to act as an oscillation membrane, and an essentially cylindrical side wall extending from the bottom wall, wherein the side wall comprises an enhancement structure enhancing the elasticity of the cylindrical side wall. Furthermore, the housing comprises an annular projection protruding from the side wall at an end of the side wall opposing the bottom wall. The enhancement structure comprises a structural modification comprising at least one annular recess arranged at an outer surface and/or an inner surface of the side wall, and wherein a distance between the at least one annular recess and the bottom wall corresponds to at least 10% of the distance between the bottom wall and the annular projection.

One embodiment relates to an ultrasonic transducer comprising a housing according to the invention. The ultrasonic transducer further comprises an oscillation generator attached to the bottom wall of the housing to excite oscillations of the bottom wall, and a mounting element receiving an upper end of the housing, the upper end of the housing facing away from the bottom wall of the housing, wherein the mounting element encloses an upper part of the cylindrical side wall and wherein a lower part of the side wall and the bottom wall of the housing protrude from the mounting element.

Yet another embodiment relates to a vehicle comprising the housing according to the invention and/or an ultrasonic transducer according to an above-described embodiment.

Another aspect of the invention relates to a use of an enhancement structure enhancing the elasticity of a cylindrical side wall of a housing for an ultrasonic transducer extending from a bottom wall of the housing for increasing a possible oscillation amplitude of the bottom wall of the housing to increase an achievable sound pressure level and/or an achievable sensitivity of the ultrasonic transducer.

Yet another aspect of the invention relates to a method for designing an ultrasonic transducer. The method comprises selecting a housing for the ultrasonic transducer having a bottom wall, which is adapted to act as an oscillation membrane, and an essentially cylindrical side wall extending from the bottom wall. The method further comprises calculating a structural modification for the side wall of the housing for enhancing the elasticity of the cylindrical side wall to adjust emission characteristics and/or a sensitivity of the ultrasonic transducer. Calculating the structural modification for the side wall of the housing may include a computer simulation of an oscillatory behavior of the housing and/or emission characteristics of the ultrasonic transducer.

Yet another aspect of the invention relates to a method for manufacturing a housing for an ultrasonic transducer. The method comprises providing a housing for the ultrasonic transducer having a bottom wall, which is adapted to act as an oscillation membrane, and an essentially cylindrical side wall extending from the bottom wall. The method further comprises applying a structural modification to the side wall of the housing for enhancing the elasticity of the cylindrical side wall to adjust emission characteristics and/or a sensitivity of the ultrasonic transducer. An ultrasonic transducer is an ultrasonic device, which may provide a function of emitting ultrasonic waves as well as receiving and detecting ultrasonic waves. In particular, an ultrasonic transducer may emit an ultrasonic wave at a first period of time and receive and detect a possible reflection of the emitted ultrasonic wave at a second period of time.

The oscillation membrane is adapted to oscillate when being excited by an oscillation generator, wherein the oscillations of the oscillation membrane result in ultrasonic waves being emitted by the oscillating membrane.

The side wall being "essentially cylindrical" means that the side wall has a cylindrical shape, although deviations from a perfectly cylindrical shape are allowed. Such deviations may relate to a base area of the side wall, in particular the bottom wall, not having a perfectly round shape. For instance, the bottom wall may have an elliptical shape, in which case for instance the side wall may deviate from the cylindrical shape by having an elliptical base area. Alternatively or additionally, deviations from a perfectly cylindrical shape may originate in tolerances of a manufacturing process of the housing. Nevertheless, such essentially cylindrical side walls shall be considered as cylindrical side walls.

The side wall is regarded as a section of the housing extending from the bottom wall at a lower end of the housing to the annular projection at an upper end of the housing. The bottom wall may coincide with the bottom end of the housing. Hence, the length of the side wall is regarded as the length of the section from the lower end of the annular projection to the lower end of the housing, at which the bottom wall is arranged. The annular projection itself is not considered as a part of the cylindrical side wall and, hence, the length of the annular projection in a direction parallel to the longitudinal extension of the cylindrical side wall does not contribute to the length of the side wall according to the chosen definition of the side wall.

An enhancement structure is a structural and/or material feature of the side wall, which distinguishes the side wall from a side wall from a side wall not having such an enhancement element. In particular, the enhancement element may be adapted to locally alter the rigidity and/or stiffness of the side wall as compared to the material and structural properties of the side wall besides the enhancement element. The enhancement structure may comprise a local structural modification and/or a local material modification of the side wall.

A structural modification of the side wall is a structural feature applied to the side wall to alter an otherwise regular or plain side wall, for instance with respect to the surface and/or texture and/or thickness of the side wall. The structural modification may include a recess and/or a protrusion and/or a hole and/or more than one of these features and/or a combination of these. The structural modifications may also include a periodic arrangement of features, wherein the periodicity may be related or unrelated to a design wavelength of the ultrasonic waves to be emitted and/or received by the ultrasonic transducer.

A material modification of the side wall may be a partly or local alteration of the material properties of the side wall. For instance, the material modification may relate to one or more areas of the side wall having a different composition with regard to the material the side wall is made of than other regions or the remaining rest of the side wall. For example, the material modification may comprise one or more regions of the side wall being formed of a metallic material, such as an alloy, and/or a polymeric material, wherein the remaining rest of the side wall may be formed of aluminum.

The elasticity of the side wall is an ability of the side wall to reverse a change in its shape caused by an external influence under its own power. The elasticity is, thus, a measure for its flexibility and its ability to reversibly deform under mechanical tension. The elasticity may be described by a respective modulus of elasticity, also referred to as Young modulus. The higher the elasticity of the side wall is, i.e., the higher its ability to deform under mechanical tension and reversing the deformation on its own power, the higher its modulus of elasticity is. In other words, a side wall having a high elasticity shows a low stiffness. The elasticity may vary for different frequency ranges of oscillations and for different types of oscillations. If not explicitly stated otherwise, the elasticity in the context of the described embodiments shall mean the elasticity at frequencies in the frequency range of the ultrasonic waves to be emitted by the ultrasonic transducers. An enhancement of the elasticity represents an increase in elasticity. Thus, a side wall having an enhancement structure enhancing the elasticity of the side wall has a higher elasticity than a side wall having no enhancement structure.

The emission characteristics of an ultrasonic transducer may include several parameters, wherein adjusting the emission characteristics may involve adjusting only one or some of these parameters. One of the parameters belonging to the emission characteristics may be the angular intensity distribution of the emitted ultrasonic waves, i.e., a measure of which part of the total emitted intensity is emitted under which horizontal and/or vertical emission angle. Further parameters may be the amplitude and/or frequency and/or a sound pressure level (SPL) of the emitted ultrasonic wave at a predetermined distance and in a predetermined direction from the ultrasonic transducer. The SPL is defined by the following mathematical expression (1):

$$(1) \qquad SPL = 20\, log \frac{P_{transducer}}{P_0}$$

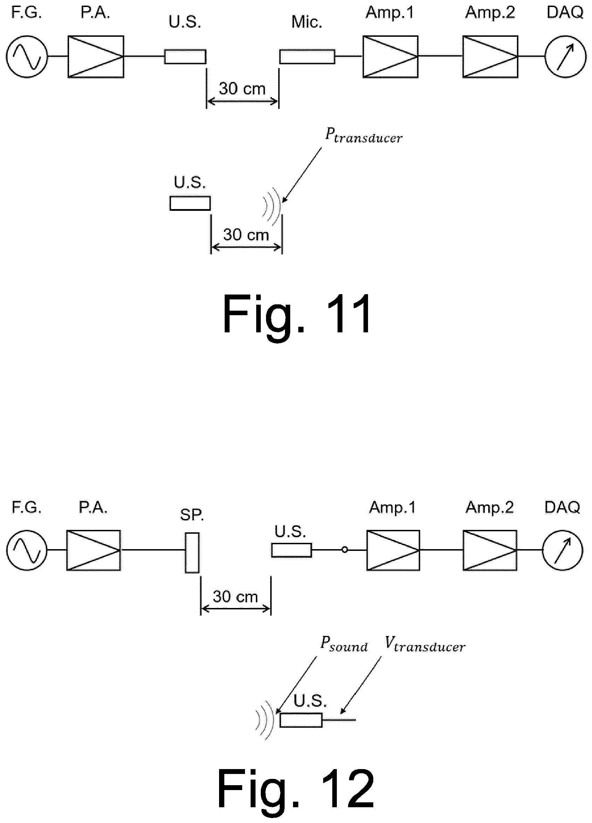

wherein $P_{transducer}$ is the measured pressure of the ultrasonic wave at a predetermined distance and in a predetermined direction from the ultrasonic transducer and $P_0$ is a reference pressure of 20 $\mu Pa$. Values of the SPL are typically provided in the unit dB. Further details about the method for determining the SPL of an ultrasonic transducer are provided further below with reference to Figure 11.

The sensitivity of the ultrasonic transducer is defined by the following mathematical expression (2):

$$(2) \qquad Sensitivity = 20\, log \frac{S_{transducer}}{S_0} = 20\, log \frac{V_{transducer}}{P_{sound} \cdot S_0}$$

wherein $S_{transducer}$ represents the signal response (possibly provided in the unit V /Pa) of the ultrasonic transducer and $S_0$ represents a reference signal response of *1 V/Pa*. The further parameters indicate the signal voltage ($V_{transducer}$) generated by the ultrasonic transducer and the pressure ($P_{sound}$) of the ultrasonic wave impinging on the ultrasonic transducer. Further details about the method for determining the sensitivity of an ultrasonic transducer are provided further below with reference to Figure 12.

The embodiments provide the advantage that the enhanced elasticity of the side wall of the housing results in a lower stiffness of the housing. This in turn allows larger displacements of the bottom wall acting as an oscillating membrane when being under the appliance of excitations by an oscillation generator. Due to the larger displacements allowed to the bottom wall, a higher sound pressure level (SPL) can be achieved for the emission of ultrasonic waves. Furthermore, a higher sensitivity can be achieved for receiving and detecting ultrasonic waves, since the enhanced elasticity of the side wall allows for larger oscillation amplitudes of the bottom wall and, thus, increases the receivable signal caused by the received ultrasonic wave.

In addition, the embodiments provide the advantage that the structural modifications and in particular the at least one annular recess may be provided with a low manufacturing effort. Hence, the increase in SPL and/or sensitivity may be achieved at low additional manufacturing costs. In particular, structural modifications may be simply applied to regular housings by adding one or more simple machining steps to the manufacturing process.

Furthermore, some embodiments provide the advantage that the enhancement structure and in particular structural modifications may be applied to regular housings and/or housings including an enhancement structure, structural modifications and/or material modifications may be provided having corresponding dimensions as regular housings. This allows using such housings in regular ultrasonic transducers without the requirement of further modifications to the ultrasonic transducer involving other components. Hence, some embodiments may allow using the housing in regular, standardized ultrasonic transducers. Consequently, some embodiments allow improving the characteristics of an ultrasonic transducer with low effort and at low costs, since only low-cost modifications to the housing may be sufficient and since no other components of the ultrasonic transducer besides the housing are necessarily to be modified or replaced.

Some embodiments may provide the advantage that the enhancement structure may be adapted to increase the SPL and/or the sensitivity of the ultrasonic transducer without necessarily significantly changing the angular distribution of the emitted and/or received sound waves. In other words, an improvement of an ultrasonic transducer may be achieved regarding its SPL and/or sensitivity while maintaining the angular sensitivity and angular distribution of emitted ultrasonic waves unchanged. This may be particularly achieved by providing the at least one annular recess arranged at an outer or inner surface of the side wall and/or by providing several annular recesses at the outer and/or inner surface of the side wall.

Optionally the distance between the at least one annular recess and the bottom wall corresponds to at least 15% of the distance between the bottom wall and the annular projection. This allows achieving a particularly high enhancement of the elasticity of the side wall and, hence, a particularly pronounced improvement of the SPL and/or the sensitivity of an ultrasonic transducer having such a housing. The distance between the annular recess and the bottom wall is the distance between the upper side of the bottom wall facing the side wall and the side of the annular recess facing the bottom wall. Likewise, the distance between the annular recess and the annular projection is the distance between the respective end of the annular projection and the side of the annular recess facing each other.

Furthermore, the distance between the at least one annular recess and the annular projection corresponds to at least 10% and optionally at least 15% of the distance between the bottom wall and the annular projection. In other words, the annular recess may be distanced also from the other end of the side wall by at least 10% or 15% of the total length of the side wall. In other words, the annular recess is arranged in an inner part of the side wall along the longitudinal direction of the cylindrical side wall extending over the inner 80%, 75% or 70% of the length of the side wall. This allows achieving a particularly high enhancement of the elasticity of the side wall and, hence, a particularly pronounced improvement of the SPL and/or the sensitivity of an ultrasonic transducer having such a housing. In particular, this may ensure a positioning of the annular recess in a part of the side wall, which is not covered by a mounting element when mounted in an ultrasonic transducer and therefore to ensure a significant enhancement of the side wall's elasticity.

Optionally a depth of the annular recess corresponds to at least 5% and not more than 50% of a thickness of the side wall and optionally at least 10% and not more than 20% of the thickness of the side wall. This allows significantly enhancing the side wall's elasticity while maintaining a sufficient mechanical strength and robustness of the housing. A suitable choice of the relative depth of the recess with respect to the thickness of the side wall may be chosen based on the desired alteration of elasticity and/or the rigidity or stability of the material and the remaining side wall. Optionally, the depth of the recess is chosen to maintain a side wall having a sufficient strength for resisting mechanical influences to be expected during the intended use of the housing and the ultrasonic transducer.

Optionally a width of the annular recess corresponds to at least 5% and not more than 70% of the distance between the bottom wall and the annular projection and optionally to at least 20% and not more than 50% of the of the distance between the bottom wall and the annular projection. This allows significantly enhancing the side wall's elasticity while maintaining a sufficient mechanical strength and robustness of the housing. Moreover, this may allow arranging the at least one annular recess of the structural modification in a section of the side wall, which is protruding from a mounting element when mounted in an ultrasonic transducer and therefore to ensures a significant enhancement of the side wall's elasticity.

In some optional embodiments the bottom wall and the side wall are formed as a single piece. In particular, the housing may be formed as a cup-shaped single piece having a bottom wall and a cylindrical side wall extending from the bottom wall. The housing may for instance be provided from a single piece of aluminum and may optionally be manufactured by deep drawing. The side wall may optionally have a thickness of 1 mm. At an upper end, the cylindrical side wall may exhibit the annular projection protruding from the outer surface and/or the inner surface of the side wall. The annular projection may also be formed as a single piece together with the side wall and the bottom wall or may be provided as a separate piece attached to the side wall.

The structural modification comprises at least one annular recess arranged at an outer surface and/or an inner surface of the side wall. The outer surface is considered as the surface of the side wall facing away from the opposite side of the essentially circular side wall. The inner surface is considered as the surface of the side wall facing towards the opposite side of the essentially circular side wall. For a cup-shaped housing, the inner surface is considered as the surface (at least partly) confining the inner volume of the cup-shaped housing. The recess is considered as being annular, if it circumferentially surrounds the cylindrical side wall and optionally forms a ring having no beginning or end. Such structural modifications bear the advantage that they may be efficiently manufactured. In particular, the manufacturing of such structural modifications may be based on machining or ablating material from the side wall, which may be fabricated on a low-cost manner. Applying the structural modifications at the inner surface may provide the advantage that an alteration of the outer surface may be avoided. Thus, the housing having the annular recess at the inner surface does not influence the interaction of the housing's outer surface with other elements of the ultrasonic transducer. Providing the annular recess at the outer surface of the side wall may provide a better accessibility and, thus, the manufacturing process can be facilitated.

The annular recess may extend parallel to the bottom wall. This may provide the advantage that a rotational symmetric alteration of the oscillatory behavior of the bottom wall can be achieved, if desired. This may be particularly beneficial for enhancing the achievable SPL and/or sensitivity of an ultrasonic transducer, optionally without significantly modifying the directional emission and/or angular receiving behavior. However, according to other embodiments, the annular recess may extend in a non-parallel manner with respect to the bottom wall, such as in an area tilted by a predetermined angle with respect to the bottom wall. This may allow tuning the angular (directional) intensity distribution of the emitted ultrasonic waves by influencing the elasticity of the side wall and, thus, of the housing in an anisotropic manner.

Optionally the structural modification comprises at least one recess and/or at least one protrusion at an outer surface and/or an inner surface of the cylindrical side wall extending over not more than 270° of the circumference of the cylindrical side wall. Therefore, the recess and/or protrusion may be adapted not to form a closed annular structure, such as a closed ring, but may extend only over three quarters of the inner or outer circumference of the side wall or less. This may allow tuning the directional intensity distribution of the emitted ultrasonic waves.

The structural modification optionally comprises at least one recess and/or at least one protrusion extending essentially perpendicular to the bottom wall. "Essentially perpendicular" means that the direction of extension of the recess and/or protrusion mainly extends perpendicular to the bottom wall and/or parallel to a central axis of the cylindrical side wall. Such a recess and/or protrusion is considered as extending essentially perpendicular to the bottom wall, if it extends perpendicular to at least one part of the bottom wall, even if other parts of the bottom wall may not be perpendicular to the direction of extension of the recess and/or protrusion, for example if the bottom wall is curved. By such structural modifications, the elasticity of the side wall may be influenced very specifically in the circumferential position, in which the recess and/or protrusion is provided. Hence, the angular or directional intensity distribution of the emitted ultrasonic wave may be tuned to strongly favor or avoid a specific angular direction.

A recess and/or a protrusion of the structural modification optionally may have a rectangular and/or triangular and/or polygonal and/or round and/or elliptical cross-sectional shape. Different cross-sectional shapes may be suitable for different modifications of the elasticity of the side wall. Different recesses and/or protrusions may have different cross-sectional shapes. Alternatively or additionally, a recess and/or protrusion may have a varying cross-sectional shape along its longitudinal extension. A suitable choice of the cross-sectional shape of a protrusion and in particular of a recess may be influenced by the thickness of the side wall and/or the intended depth of the recess and/or by the intended method for manufacturing the recess and/or the protrusion. A recess and/or a protrusion may have one or more chamfers at one or more edges of the recess and/or protrusion, i.e. one or more sloped edges. The chamfer may necessarily originate in a limited steepness of a recess and/or a protrusion achievable by the manufacturing process and/or may be intentionally provided for modifying the elasticity of the side wall of the housing.

The housing may essentially be made of aluminum. The housing may further comprise a material modification comprises a material having a higher elasticity than aluminum. In other words, a different material component may be (locally) added to the material of the housing, which typically is aluminum, to locally soften, i.e., increase the elasticity of, the side wall by the induced material modification. Choosing a material modification for altering the elasticity of the side wall may provide the benefit that the side wall may be maintained in an unchanged shape, i.e., a cylindrical side wall not exhibiting a recess and/or a protrusion, albeit of course according to some embodiments one or more material modification may be combined with one or more structural modifications.

The housing optionally further comprises a structural and/or material modification enhancing the elasticity of the bottom wall. Structural modifications of the bottom wall are described for instance in the document DE 10 2015 015 900 B3. Combining structural and/or material modifications of the side wall with structural and/or material modifications of the bottom wall may provide the advantage that the flexibility and the freedom for tuning the elasticity of the housing and, hence, the oscillatory behavior of the housing may be further increased.

When mounted in an ultrasonic transducer, the housing is typically engaged with a mounting element, wherein the mounting element encloses an upper part of the cylindrical side wall and wherein a lower part of the side wall and the bottom wall of the housing protrude from the mounting element. According to an embodiment, the structural modification and/or the material modification is at least partly located at an outer surface and/or an inner surface of the lower part of the side wall. In other words, the structural modification and/or the material modification may be arranged in that part of the side wall, which protrudes from the mounting element. This provides the advantage that the effect of the structural modification and/or material modification on the elasticity of the side wall experiences no or less influence of the mounting element, as compared to structural modifications and/or material modifications provided in the upper part of the side wall being enclosed and hence, at least partly confined by the mounting element. Moreover, this may provide the advantage that the freedom for alterations of the shape and/or extension of the side wall in a radial direction is larger for the lower part of the side wall than for its upper part, since the lower part of the side wall is not required to intrude and engage the mounting element, which otherwise might be prohibited by a structural mismatch due to the structural and/or material modifications of the side wall.

The ultrasonic transducer may be driven by an ultrasonic distance IC of the type 524.09/17 by ELMOS Semiconductor SE. However, also other comparable ICs of the same of different manufacturers may be used.

The use of an enhancement structure according to an optional embodiment may comprise the use of an enhancement structure comprising a structural modification comprising at least one annular recess arranged at an outer surface and/or an inner surface of the side wall. A distance between the at least one annular recess and the bottom wall corresponds to at least 10% of the distance between the bottom wall and the annular projection. The enhancement structure is optionally adapted to maintain a directivity angle of the ultrasonic transducer unchanged.

It is understood by a person skilled in the art that the above-described features and the features in the following description and figures are not only disclosed in the explicitly disclosed embodiments and combinations, but that also other technically feasible combinations as well as the isolated features are comprised by the disclosure of the invention. In the following, several preferred embodiments of the invention and specific examples of the invention are described with reference to the figures for illustrating the invention without limiting the invention to the described embodiments.

Further optional embodiments will be illustrated in the following with reference to the drawings.

Figure 1 shows in a schematic cross-sectional view a conventional housing for an ultrasonic transducer.

Figures 2A to 2E show in schematic cross-sectional views various housings for an ultrasonic transducer according to optional embodiments.

Figure 3 depicts a housing according to an optional embodiment in a schematic perspective view.

Figures 4A and 4B show in a schematic cross-sectional illustration a part of a conventional housing (Fig. 4A) and a housing according to an embodiment (Figure 4B).

Figures 5A and 5B show a comparison of a conventional housing (Figure 5A) with a housing according to a specific optional embodiment (Figure 5B).

Figures 5C and 5D indicate directions and dimensions used to describe the housing.

Figure 5E shows a conventional housing indicating its dimensions.

Figure 6 shows an ultrasonic transducer in a perspective view.

Figure 7 illustrates a visualization of a computer simulation of the displacement of the housing in a false-color image.

Figure 8 depicts a diagram showing the angular intensity distribution of the ultrasonic transducer described in Table 1.

Figure 9 illustrates in a graph the SPL and the sensitivity over the frequency of the emitted and detected ultrasonic waves.

Figures 10A to 10H exemplarily indicate several parameters, which may be varied for adjusting the elasticity of the side wall of the housing.

Figure 11 depicts the setup used for determining the sound pressure level.

Figure 12 depicts the setup used for determining the sensitivity.

Figure 13 exemplarily depicts in a schematic view a vehicle according to an optional embodiment.

In the drawings the same reference signs are used for corresponding or similar features in different drawings.

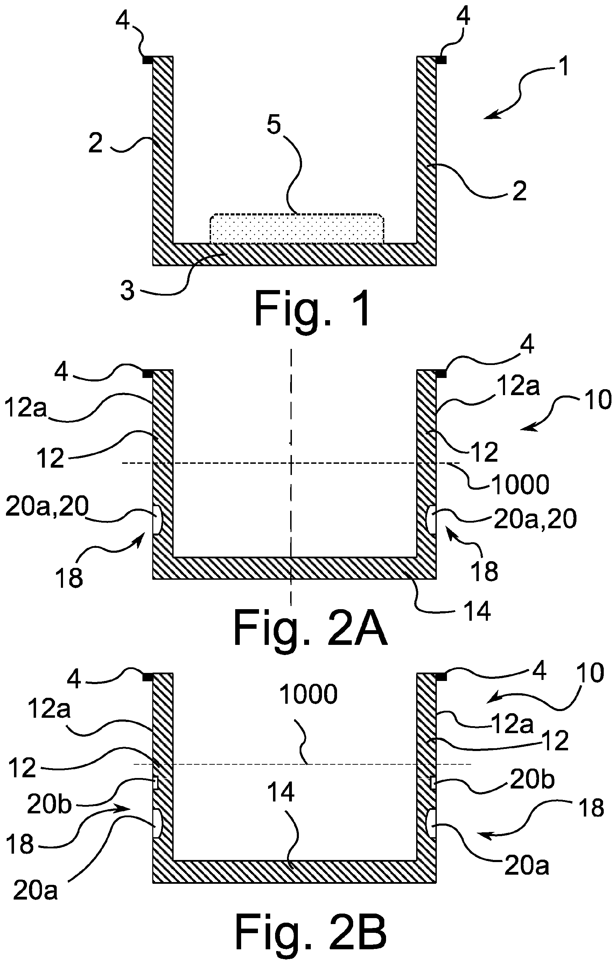

Figure 1 shows in a schematic cross-sectional view a conventional housing 1 for an ultrasonic transducer as known in the prior art. The housing has a cup-shape and forms a void partly confined by a side wall 2 and a bottom wall 3, wherein the side wall 2 and the bottom wall 3 of the housing 1 are formed as a single piece from aluminum in a thermoforming process. The side wall 2 extends from the bottom wall 3 in a perpendicular manner, wherein a lower part of the side wall 2 is connected to the bottom wall 3. An upper part of the side wall 2 comprises an annular projection 4, which serves as an anchor for mounting the upper part of the housing 1 in a mounting element (not shown). The side wall 2 and the bottom wall 3 are formed to have a uniform thickness and are homogeneously made of aluminum. Within the void formed by the cup-shaped housing 1 an oscillation generator 5 may be arranged, which is indicated with dashed lines. Said oscillation generator 5 is adapted to excite the bottom wall 3 to oscillate in order to act as a membrane for generating ultrasonic waves for the ultrasonic transducer.
Figures 2A to 2E show in schematic cross-sectional views various housings 10 for an ultrasonic transducer 100 according to optional embodiments. Like the conventional housing 1 shown in Figure 1, the housings according to these embodiments comprise a bottom wall 14 and an essentially cylindrical side wall 12 extending from the bottom wall 14. The bottom wall 14 is connected to a lower part of the side wall 12, wherein the bottom wall 14 and the side wall 12 may be formed as a single piece. At the upper end of an upper part of the side wall 12, an annular projection 4 may be formed, which may serve as an anchor for mounting the housing 10 in a mounting element (not shown). It is to be noted that the housings 10 according to the optional embodiments may be provided with the same or very similar dimensions, in particular external dimensions, as the conventional housing 1 and, thus, may be used in the same manner and serve as a replacement of the conventional housing 1.
Auxiliary line 1000 indicates an exemplary border between the upper part and the lower part of the housing 10 and the side wall 12. Auxiliary line 1002 indicates a central axis of the cylindrical side wall 12 and the housing 10.
However, the housings 10 according to the optional embodiments depicted in Figures 2A to 2E differ from the conventional housing 1 at least in having an enhancement structure 18 for enhancing the elasticity of the side wall 12. The enhancement structure 18 may particularly comprise one or more structural modifications 20 and/or material modifications 22 locally altering the structural properties and/or material composition of the side wall 12 in order to enhance the elasticity of the side wall 12.
The enhancement element 18 and in particular the structural modifications 20 and/or the material modifications 22 may be arranged in the lower part of the side wall 12, wherein according to some alternative embodiments some or all of the structural modifications 20 and/or the material modifications 22 may be arranged in the upper part of the side wall 12.

The housing 10 depicted in Figure 2A comprises an enhancement element 18 comprising a structural modification 20 at an outer surface 12a of the side wall 12, which is an annular recess 20a extending parallel to the bottom wall 14. The annular recess 20a has a depth of about 50% of the total thickness of the side wall 12 and a rectangular cross-sectional profile having rounded corners, which resembles the capital letter D. The annular recess 20a is located at the lower part of the side wall 12 to ensure that the annular recess 20a is not covered by a surrounding mounting element when mounted in such. The annular recess 20a locally reduces the thickness of the side wall 12 and, thus, enhances the elasticity of the side wall to allow a larger displacement of the bottom wall 14 when excited to oscillate.

Figure 2B shows a housing 10 according to a further embodiment similar to embodiment of Figure 2A, wherein the enhancement structure 18 comprises a second annular recess 20b located at the lower part of the side wall 12 above the first annular recess 20a. The second annular recess 20b differs from the first annular recess 20a in its cross-sectional shape, depth and width. However, according to further embodiments, both annular recesses 20a, 20b may share the same dimensions with respect to the cross-sectional shape, depth and/or width. These parameters may be varied for adjusting the elasticity of the side wall 12 and the oscillatory behavior of the housing 10. Alternatively or additionally, the distance between the annular recesses 20a, 20b may be varied for adjusting the elasticity and/or the oscillatory behavior.

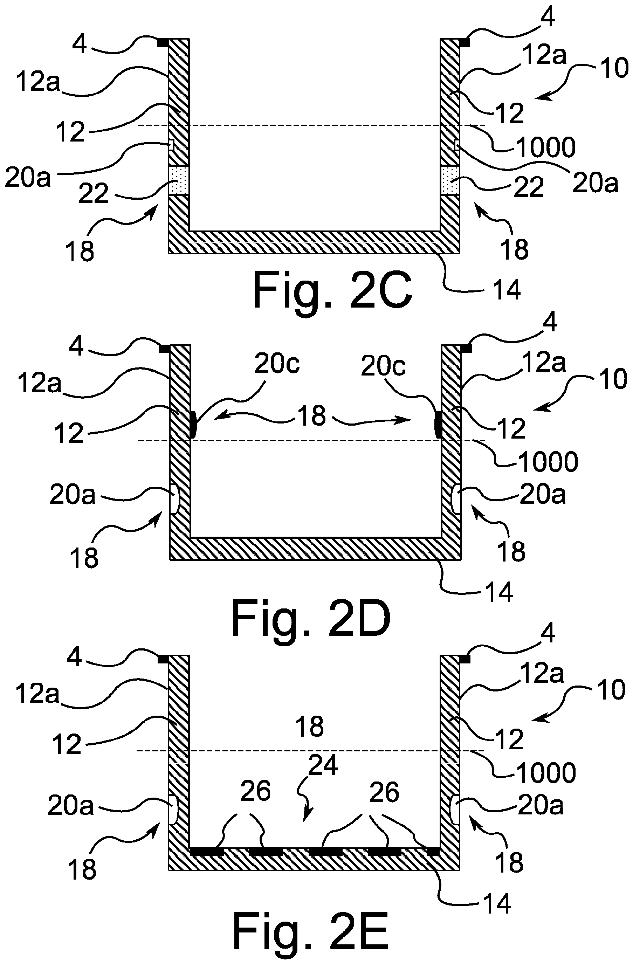

Figure 2C depicts a housing 10 according to a further optional embodiment, wherein the enhancement structure 18 comprises a structural modification 20 and a material modification 22. The structural modification 18 is an annular recess 20a similar to those shown in Figure 2B. The additional material modification 22 represents a local variation of the material composition of the side wall 12. By choosing a material for the material modification 22 having a higher elasticity than the remaining parts of the side wall 12, the elasticity of the side wall 12 and the oscillatory behavior of the housing 10 may be increased and altered, respectively. For instance, the material composition of the (remaining) side wall 12 may be aluminum, while the material composition of the material modification may comprise or consist of a softer material having a higher elasticity than the aluminum of the remaining side wall 12. The choice of material and the extension of the material modification 22 may be varied for adjusting the housing's 10 elasticity. In addition, the extension, cross-sectional shape, and position of the structural modification 20a may be used for adjusting the elasticity of the side wall 10. According to further optional embodiments, the enhancement structure 18 may only comprise one or more material modifications 22.

Figure 2D depicts a further optional embodiment, wherein the enhancement structure 18 comprises two structural modifications 20 including an annular recess 20a and an annular protrusion 20c. The annular protrusion 20c is located in the upper part of the side wall 12 and may influence the oscillatory behavior of the side wall 12, in particular also of the lower part of the side wall 12. According to other embodiments, one or more annular protrusions may be located also in the lower part of the side wall 12.

Figure 2E shows yet another optional embodiment of a housing 10 having an enhancement structure 18 enhancing the elasticity of the side wall 12 and having a further enhancement structure 24 enhancing the elasticity of the bottom wall 14. The enhancement structure 18 of the side wall 12 comprises an annular recess 20a increasing the elasticity of the side wall. The further enhancement structure 24 comprises several recesses 26 in the bottom wall 14, which may extend for instance in a circular or a linear manner. According to some embodiments, the recesses 26 in the bottom wall 14 may extend in different directions and for example form a grid like structure. The further enhancement structure 24 may alternatively or additionally comprise one or more local material modifications of the bottom wall 14. This combination allows altering the elasticity of the side wall 12 and also of the bottom wall 14 and, thus, provides a larger number of degrees of freedom for adjusting the oscillatory behavior of the housing 10.

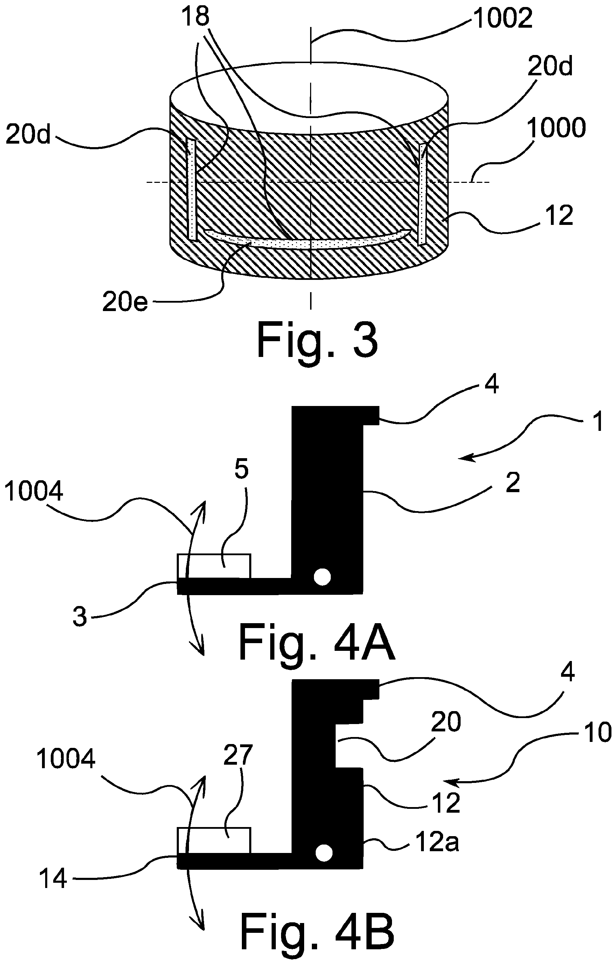

Figure 3 depicts a housing 10 according to an optional embodiment in a schematic perspective view. The side wall 12 comprises an enhancement structure 18 comprising several vertical recesses 20d extending parallel to the central axis of the cylindrical side wall 12, as well as a sectional recess 20e extending in circumferential direction parallel to the bottom wall 14 over a part of the side wall's circumference. Such an enhancement structure 18 may allow adjusting the elasticity of the side wall 12 and the housing 10 in an anisotropic manner and, thus may allow altering the angular intensity distribution of emitted ultrasonic waves in an effective manner.

Figures 4A and 4B show in a schematic cross-sectional illustration a part of a conventional housing 1 (Fig. 4A) and a housing 10 according to an embodiment (Figure 4B). Both housings 1, 10 each comprise an oscillation generator 5, 27 attached to the bottom wall 3, 14 of the housing 1, 10. Each of the oscillation generators 5, 27 may include a piezoelectric element transforming an electrical voltage applied to it into mechanical displacement, which will displace the bottom wall 3, 14 and generate oscillations of the bottom wall 3, 14. The bottom wall 3, 14 acts as a membrane oscillating when driven by the oscillation generator 5, 27. The displacement of the bottom wall 3, 14 when driven by the respective oscillation generator 5, 27 is indicated by arrow 1006. The housing according to the embodiment shown in Figure 4B differs from the conventional housing 1 shown in Figure 4A by having an enhancement structure 18, which is adapted as a structural modification 20 of the side wall 12 by means of an annular recess 20a. This structural modification 20 reduces the moment of inertia of the side wall, which leads to a reduces stiffness of the side wall 12 and, hence, enhances the elasticity of the side wall 12 as compare to the conventional housing 1. Accordingly, the enhancement structure 18 influences the oscillatory behavior of the bottom wall 14 and, thus, influences the possible displacement of the bottom wall. By this, the emission characteristics and/or a sensitivity of an ultrasonic transducer comprising said housing 10 can be adjusted, such as an angular intensity distribution of ultrasonic waves emitted by the ultrasonic transducer and or the achievable sound pressure level and/or its sensitivity.

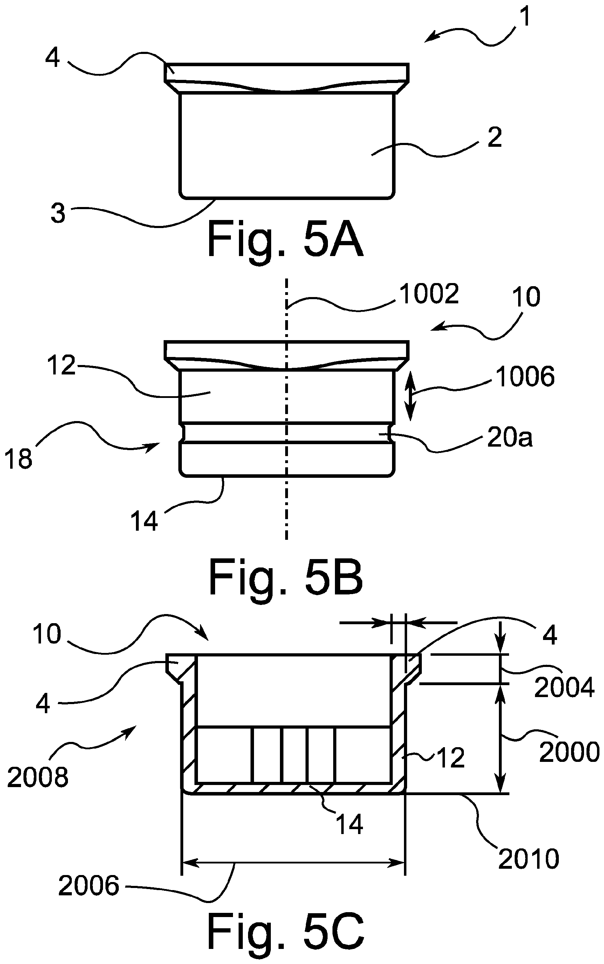

Figures 5A and 5B show a comparison of a conventional housing 1 (Figure 5A) with a housing according to a specific optional embodiment (Figure 5B).

Figure 5C indicates the dimensions and directions used in the present disclosure for describing the housing 10. The length of the cylindrical side wall 12 is indicated as 2000 and extends from its upper end 2008, which is in contact with the lower end of the annular projection 4, to its lower end 2010, at which the bottom wall 14 is arranged. The annular projection 4 has a thickness indicated as 2004. The thickness of the side wall 12 is indicated as 2002. The reference sign 2006 indicates the diameter of the housing.

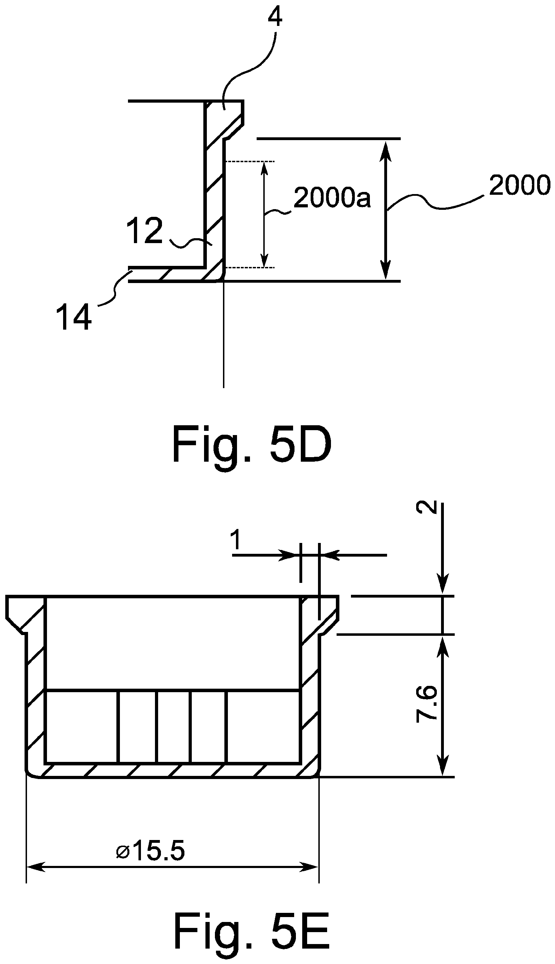

Figure 5D illustrates an enlarged view of a section of the housing 10 shown in Figure 5C. In this enlarged view a section 2000a of the length of the side wall 12 is indicated, which extends over about 80% of the total length 2000 of the side wall 12. The outer 10% on the upper end and the lower end of the side wall, respectively, are not covered the section 2000a. According to some optional embodiments, the annular recess may be arranged solely in this length section 2000a. According to other embodiments, the section 2000a may not cover the upper and/or lower 15% of the total length 2000 of the side wall. According to other embodiments, only the outer 10% or 15% at the lower end 2010 of the housing may be spared by the length section 2000a, in which the annular recess may be arranged.

The conventional housing is specified by the following parameters (as indicated in Figure 5E):

| | |
|---|---|
| Total length of cylindrical side wall (excl. annular projection): | 7,6 mm |
| Height of annular projection: | 2 mm |
| Diameter (excl. annular projection): | 15,5 mm |
| Thickness of cylindrical side wall: | 1 mm |
| Material: | Aluminum alloy UNS A96061 |

The housing 10 according to the optional embodiment (Figure 5B) shares the same dimensions as the conventional housing 10 but differs from the conventional housing of Figure 5A in the enhancement structure 18, which is a annular recess 20a having a width (along the direction of the central axis 1002 of the housing 10) of 1,5 mm, a depth (in radial direction) of 0,1 mm and a vertical distance (along the direction of the central axis 1002 of the housing 10, see arrow 1006) from the lower surface of the annular projection 4 of 3,75 mm. The depth of the annular recess 20a corresponds to 10% of the side wall's 12 thickness, i.e., the depth of the annular recess 20a being 0,1 mm compared to a total thickness of the side wall of 1 mm.

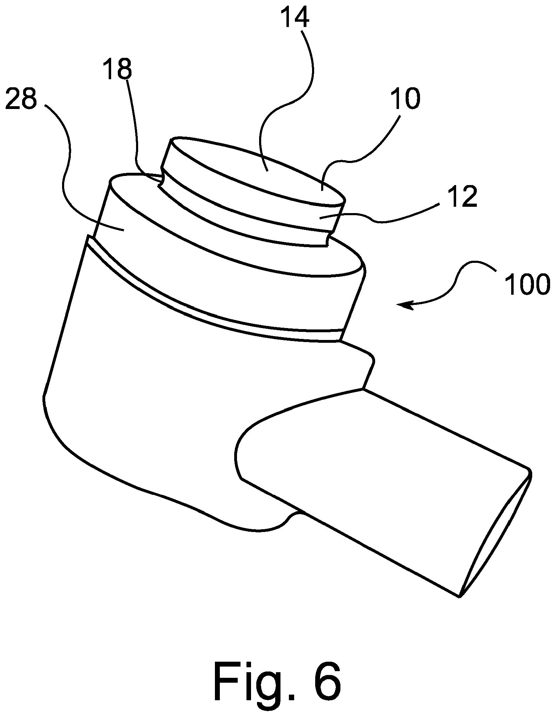

Due to the enhancement structure 18, the side wall 12 exhibits and enhanced elasticity as compared to the side wall 3 of the conventional housing 1, which results in improved parameters of an ultrasonic transducer 100 (shown in Figure 6) having a housing 10 according to the optional embodiment of Figure 5B as compared to a comparable conventional ultrasonic transducer including the conventional housing 1 shown in Figure 5A. The conventional ultrasonic transducer being comparable means that the conventional ultrasonic transducer is identical to the ultrasonic transducer 100 of Figure 6 with respect to all other features besides the housing. As can be seen in Figure 6, the enhancement structure 18 is located outside the mounting element 28, when the housing 10 is mounted in a mounting element 28, since the enhancement structure 18 is located in the lower part of the housing protruding from the mounting element 28.

A comparison of both ultrasonic transducers shown in Figures 5A and 5B leads to the results presented in Table 1:

**Table 1**

| | Displacement (mm) | Frequency (kHz) | Horizontal (degree) | Vertical (degree) | SPL (dB) |
|---|---|---|---|---|---|
| Conventional | 0,049 | 50,29 | 121 | 61 | 110,61 |
| Embodiment | 0,0764 | 50,24 | 125,5 | 62.4 | 113,78 |

"Conventional" indicates the ultrasonic transducer having the conventional housing 1 of Figure 5A. "Embodiment" indicates the ultrasonic transducer 100 having the conventional housing 10 of Figure 5B. The values presented in columns 2 to 6 are specified in the following:

Displacement: Maximum displacement of the bottom wall in the direction parallel to the central axis of the housing.

Frequency: Resonance frequency of the ultrasonic transducer.

Horizontal: Maximum angle of the angular intensity distribution of the emitted ultrasonic waves in horizontal direction (direction when mounted in a parking assistance system of a vehicle).

Vertical: Maximum angle of the angular intensity distribution of the emitted ultrasonic waves in vertical direction (direction when mounted in a parking assistance system of a vehicle).

SPL: Sound pressure level.

As can be seen from the values provided in Table 1, the enhancement structure 18 significantly improves the performance of the ultrasonic transducer. The displacement is increased to 0,0764 mm compared to 0,049 mm. The resonance frequency is slightly reduced from 50,29 kHz to 50,24 kHz. The horizontal maximum angle increases from 121° to 125,5° and the vertical angle from 61° to 62,4°. The SPL is improved from 110,61 dB to 113,78 dB. Consequently, the enhancement structure 18 improves the parameters and characteristics of the ultrasonic transducer. Varying the enhancement structure allows adjusting the parameters and characteristics of the ultrasonic transducer to optimize the parameters to individual requirements.

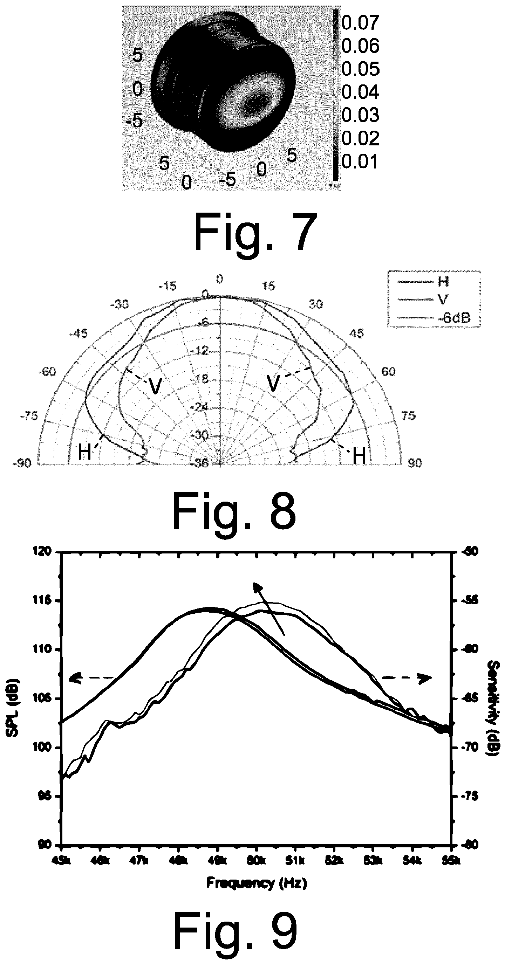

Figure 7 illustrates a visualization of a computer simulation of the displacement of the housing 10 in a false-color image. The simulation of the housing was obtained with a finite element method. As can be seen in the visualization, the oscillation and displacement of the housing 10 is mostly confined to the bottom wall 14, whose oscillation behavior, however, is strongly influenced by the elasticity of the side wall 12.

Figure 8 depicts a diagram showing the angular intensity distribution of the ultrasonic transducer described in Table 1 as "Embodiment", wherein the line covering the broader angle represents the horizontal angular intensity distribution and the line covering the smaller angle represents the vertical angular intensity distribution.

Figure 9 illustrates in a graph the SPL in dB (left vertical axis) and the sensitivity in dB (right vertical axis) over the frequency of the emitted and detected ultrasonic waves in kHz (horizontal axis). Both the SPL and the sensitivity are each plotted for the conventional ultrasonic transducer having the housing 1 shown in Figure 5A and the ultrasonic transducer according the embodiment having the housing 10 shown in Figure 5B, respectively. While the SPL is mainly unaffected by the enhancement structure, the sensitivity of the ultrasonic transducer having the enhancement structure is increased over a wide frequency range relative to the conventional ultrasonic transducer. Hence, the plot indicates that the enhancement structure is capable of improving the sensitivity of an ultrasonic transducer.

The performance of an ultrasonic transducer depends on both the SPL and the sensitivity. In some embodiments, an increase of the driving energy increases the SPL but typically leaves the sensitivity of the ultrasonic transducer largely unaffected. According to yet other embodiments, increasing the elasticity of the cylindrical side wall results in an increase of the sensitivity of the ultrasonic transducer due to the gained degree of freedom and, thus, increases the performance of the ultrasonic transducer.

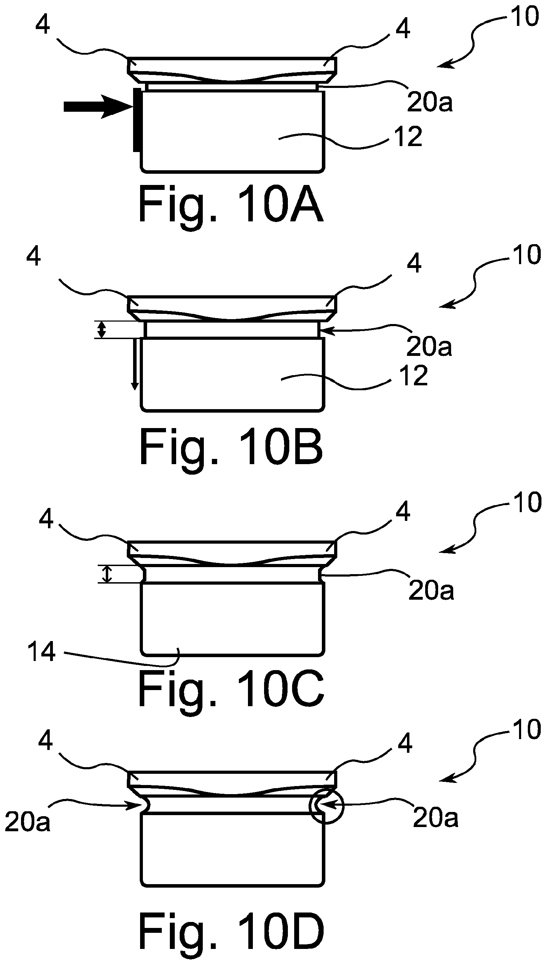

Figures 10A to 10H exemplarily indicate several parameters, which may be varied for adjusting the elasticity of the side wall 12 of the housing 10 and by this adjusting the oscillatory behavior of a respective ultrasonic transducer 26. The shown examples relate to variations of a structural modification adapted as an annular recess 20a. The modifications are applied to a conventional housing having the parameters specified with reference to Figure 5C. The parameters of the modifications are the depth of the annular recess 20a (Figure 10A), which may be for example 0,1 mm or 0,2 mm and/or a predetermined ratio of the thickness of the side wall 12. The following table presents data of a housing 10 shown in Figure 10A having the dimensions specified in Figure 5C and an annular recess 20a at the outer surface directly underneath the annular projection 4 with a rectangular cross-sectional shape, a width of 0,5 mm and a depth of 0,1 mm and 0,2 mm, respectively.

| Unit (mm) | Displacement (mm) | Frequency (kHz) | Horizontal (degree) | Vertical (degree) | SPL (dB) |
|---|---|---|---|---|---|
| No recess | 0,0494 | 50,29 | 121 | 61 | 110,61 |
| W 0,5 x D 0, 1 | 0,0502 | 50,29 | 129,2 | 63 | 110,5 |
| W 0,5 x D 0,2 | 0,0484 | 50,26 | 126,85 | 61,6 | 110,32 |

The table presents the width (W) and depth (D) of the annular recess 20a, the maximum achievable displacement of the bottom wall when excited, the oscillation frequency, the horizontal and vertical emission angle and the sound pressure level. As can be seen, the depth of the annular recess 20a allows in particular increasing the displacement modifying the angular intensity distribution.

Figure 10B presents data for modifying the width of the annular recess 20a at the outer surface of the side wall 12 located directly underneath the annular projection while maintaining the depth unchanged at 0,1 mm. To collect experimental data, the width is varied between 0,5 mm to 6,5 mm. The obtained values are presented in the table below:

| Unit (mm) | Displacement (mm) | Frequency (kHz) | Horizontal (degree) | Vertical (degree) | SPL (dB) |
|---|---|---|---|---|---|
| No recess | 0,0494 | 50,29 | 121 | 61 | 110,61 |
| W 0,5 x D 0,1 | 0,0502 | 50,29 | 129,2 | 63 | 110,5 |
| W1,5xD0,1 | 0,0510 | 50,27 | 127 | 61,5 | 110,68 |
| W 2,5 × D 0,1 | 0,0514 | 50,239 | 124 | 59,5 | 110,73 |
| W 3,5 × D 0,1 | 0,0514 | 50,195 | 121,5 | 62 | 110,65 |
| W 4,5 × D 0,1 | 0,0510 | 50,215 | 127,5 | 62 | 110,73 |
| W 5,5 × D 0,1 | 0,0514 | 50,192 | 129 | 63 | 110,77 |
| W 6,5 × D 0,1 | 0,0488 | 50,209 | 124,5 | 60 | 110,92 |

As can be seen, varying the width of the annular recess 20a strongly affects the achievable displacement of the bottom wall. A maximum displacement of 0,0514 mm was achieved for a width in the range around 2,5 mm and 3,5 mm.

As shown in Figure 10C, the vertical distance of the annular recess 20a from the annular projection 4 (Figure 10C) is varied. The dimensions of the annular recess 20a at the outer surface of the side wall 12 is fixed at a width of 0,5 mm and a depth of 0,1 mm and the distance between the annular projection 4 and the annular recess 20a is varied resulting in a change of the achievable displacement, as presented in the following table. In addition, the upper and lower edge of the annular recess 20a are provided with a chamfer, i.e. a sloped edge, wherein the slope extends over a length of 0,2 mm. According to some embodiments, the process for machining the annular recess may naturally result in the edges of the annular recesses having a chamfer. However, according to other embodiments, the vertical distance of the annular recess 20a may be varied without providing the edges with a chamfer.

| Unit (mm) | Displacement (mm) | Frequency (kHz) | Horizontal (degree) | Vertical (degree) | SPL (dB) |
|---|---|---|---|---|---|
| No recess | 0,0494 | 50,29 | 121 | 61 | 110,61 |
| W 1,5X D 0,1<br>Distance = 0 mm<br>Chamfer = 0,2 mm | 0,066 | 50,27 | 119,5 | 61 | 112,08 |
| W 1,5X D 0,1<br>Distance = 1,5 mm<br>Chamfer = 0,2 mm | 0,076 | 50,22 | 127,3 | 62,5 | 113,68 |
| W 1,5X D 0,1<br>Distance = 3,75 mm<br>Chamfer = 0,2 mm | 0,0764 | 50,24 | 125,5 | 62,4 | 113,78 |

As can be seen, varying the distance between the lower end of the annular projection 4 and the upper end of the annular recess 20a, the displacement can be significantly improved from a value of 0,066 mm to 0,0764 mm.

As shown in Figure 10D, the cross-sectional shape of the annular recess 20a may be varied, in particular the diameter or radius of a round cross-sectional profile.

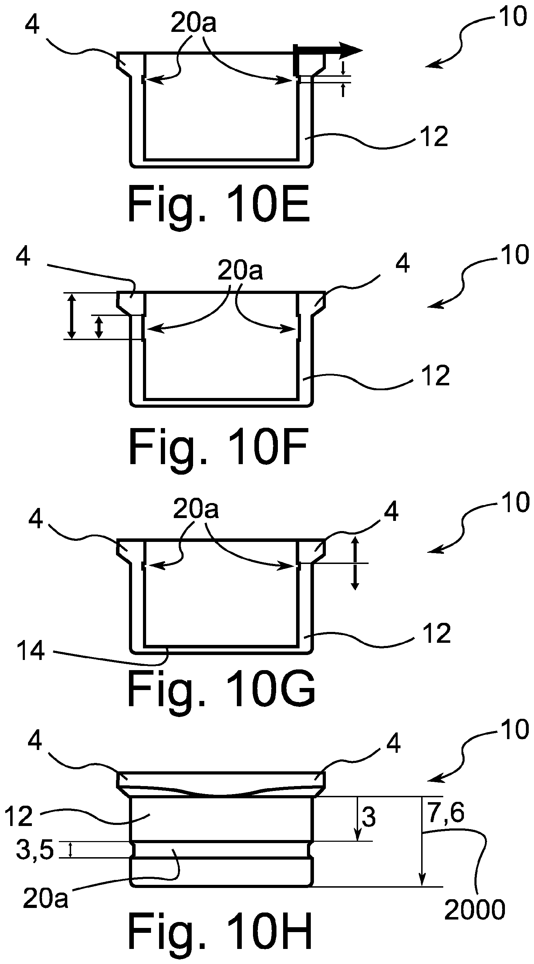

Alternatively or additionally, annular recesses provided at the inner surface of the side wall may be varied for example with respect to the parameters depth (Figure 10E), width (Figure 10F); and the vertical distance of the annular recess 20a from the annular projection 4 (Figure 10G).

With reference to Figure 10E, an annular recess 20a having a width W of 0,5 mm is provided at the inner surface of the side wall 12. The depth D of the annular recess 20a is varied between 0,1 mm and 0,5 mm, resulting in an increase of the displacement, as presented in the following table compared to a housing having no annular recess.

| Unit (mm) | Displacement (mm) | Frequency (kHz) | Horizontal (degree) | Vertical (degree) | SPL (dB) |
|---|---|---|---|---|---|
| No recess | 0,0494 | 50,29 | 121 | 61 | 110,61 |
| W 0,5 X D 0,1 | 0,0542 | 50,265 | 129 | 63 | 110,52 |
| W 0,5 X D 0,2 | 0,0542 | 50,292 | 127,4 | 62,4 | 110,34 |

(continued)

| Unit (mm) | Displacement (mm) | Frequency (kHz) | Horizontal (degree) | Vertical (degree) | SPL (dB) |
|---|---|---|---|---|---|
| W 0,5 X D 0,3 | 0,0501 | 50,29 | 130 | 65,5 | 110,20 |
| W 0,5 X D 0,4 | 0,0494 | 50,288 | 126,4 | 62,1 | 110,09 |
| W 0,5 X D 0,5 | 0,0490 | 50,255 | 127 | 64 | 110,17 |

As can be seen, a maximum displacement was obtained with annular recesses at the inner surface of the side wall having a depth around 0,1 mm and 0,2 mm.

Likewise, as indicated in Figure 10F, the width of the annular recess at the inner surface of the side wall 12 can be varied, resulting the in the data presented in the following table.

| Unit (mm) | Displacement (mm) | Frequency (kHz) | Horizontal (degree) | Vertical (degree) | SPL (dB) |
|---|---|---|---|---|---|
| No recess | 0,0494 | 50,29 | 121 | 61 | 110,61 |
| W 0,5 × D 0,1 | 0,0542 | 50,265 | 129 | 63 | 110,52 |
| W 1,0 × D 0,1 | 0,0552 | 50,289 | 128 | 61,4 | 110,58 |
| W 1,5 × D 0,1 | 0,0557 | 50,260 | 126,8 | 62,2 | 110,59 |
| W 2,0 × D 0,1 | 0,0564 | 50,241 | 124,5 | 62,1 | 110,55 |
| W 2,5 × D 0,1 | 0,0567 | 50,183 | 122 | 60 | 110,70 |
| W 3,0 × D 0,1 | 0,0520 | 50,165 | 126,1 | 62 | 110,38 |
| W 4,0 × D 0,1 | 0,0522 | 50,169 | 124,5 | 63 | 110,39 |

As can be seen, a maximum increase of displacement may be achieved by a annular recess at the inner surface having a width in the range around 2,0 mm to 2,5 mm.

With reference to Figure 10G, the effect of a variation of the vertical position of the annular recess 20a at the inner surface of the side wall 10 is presented. The resulting parameters are presented for different displacements of the annular recess. A zero displacement is defined as the position of the annular recess, where the upper end of the annular recess 20a coincides with the vertical position of the lower end of the annular projection 4. Moving the annular recess 20a upwards means that the annular recess 20a is displaced towards the upper end of the housing. Moving the annular recess 20a down means that the annular recess 20a is displaced towards the lower end of the housing, i.e. towards the bottom wall. The variation leads to the following results:

| Unit (mm) | Displacement (mm) | Frequency (kHz) | Horizontal (degree) | Vertical (degree) | SPL (dB) |
|---|---|---|---|---|---|
| No recess | 0,0494 | 50,29 | 121 | 61 | 110,61 |
| W 0,5 X D 0,1 move up 2 mm | 0,0528 | 50,299 | 128,1 | 61,5 | 111,08 |
| W 0,5 X D 0,1 move up 1 mm | 0,0543 | 50,279 | 130 | 57,5 | 110,41 |
| W 0,5 X D 0,1 | 0,0542 | 50,265 | 129 | 63 | 110,52 |
| W 0,5 X D 0,1 move down 0,5 mm | 0,0545 | 50,277 | 127 | 62 | 110,99 |
| W 0,5 X D 0,1 move down 1 mm | 0,055 | 50,255 | 126 | 62,9 | 110,67 |
| W 0,5 X D 0,1 move down 1,5 mm | 0,055 | 50,246 | 128,6 | 64,5 | 110,82 |
| W 0,5 X D 0,1 move down 2 mm | 0,0556 | 50,205 | 126,5 | 62 | 110,65 |

EP 4 218 003 B1

(continued)

| Unit (mm) | Displacement (mm) | Frequency (kHz) | Horizontal (degree) | Vertical (degree) | SPL (dB) |
|---|---|---|---|---|---|
| W 0,5 X D 0,1 move down 2,5 mm | 0,0538 | 50,148 | 126,5 | 61,4 | 110,55 |

As can be seen, the highest increase of displacement can be achieved when moving the annular recess at the inner surface of the side wall 12 down by about 1 mm to 2 mm.

Figure 10H exemplarily and schematically presents a housing according to an optional embodiment having an annular recess 20a at the outer surface of the side wall 12, wherein the annular recess 20a has a width of 3,5 mm and a displacement from the annular projection 4 of 3 mm. The total length 2000 of the side wall 12 is 7,6 mm.

Figure 11 depicts the setup used for determining the sound pressure level (SPL) of the ultrasonic transducers compared in table 1. On the emitter side, the ultrasonic transducer U.S. is provided, which is driven by a function generator F.G. and a power amplifier P.A.. At the receiver side, in a distance of 30 cm along the central axis of the housing of the ultrasonic transducer, a microphone Mic. is provided for detecting the ultrasonic sound pressure $P_{transducer}$ emitted by the ultrasonic transducer. The signal output of the microphone is fed into a first amplifier Amp. 1 and a second amplifier Amp. 2 and collected by a data acquisition card (DAQ).

The setup for measuring the sensitivity of the ultrasonic transducer, as used for obtaining the data presented in table 1, is shown in Figure 12 and largely resembles the setup for measuring the SPL, as discussed with reference to Figure 11. Most of the components are identical to the setup shown in Figure 11 and will not be explained again for the sake of conciseness. However, the setup for measuring the sensitivity differs from the SPL-setup in the ultrasonic transducer being necessarily involved in the receiver side, since the output of the ultrasonic transducer is to be analyzed. Therefore, on the emitter side an ultrasonic source S.P., i.e. a tweeter, is provided, which is driven by the frequency generator F.G. and the power amplifier P.A.. On the receiver side, the signal output of the ultrasonic transducer U.S. is fed into the first and second amplifier Amp. 1 and Amp. 2 and finally collected by the data acquisition card DAQ.

Commercially available standard devices have been used for the setups. It was found that the measured signals did not vary when replacing one or more of the devices included in the setup by different, comparable devices provided by a different manufacturer. Just for the sake of providing an example, the following devices are mentioned as suitable for the above-mentioned setups:

| Device | Manufacturer | Model Series |
|---|---|---|
| F.G. | Gw instek | AFG-30xx Series |
| P.A. | NF | HSA Series |
| S.P. | Murata | ES10x Series |
| Mic. | BSWA | MPA Series |
| Amp. | BSWA | MC Series |
| DAQ | AD-LINK | DAQe-2000 Series |

For driving the ultrasonic transducer, an ultrasonic distance IC of the type 524.09/17 of ELMOS Semiconductor SE has been used.

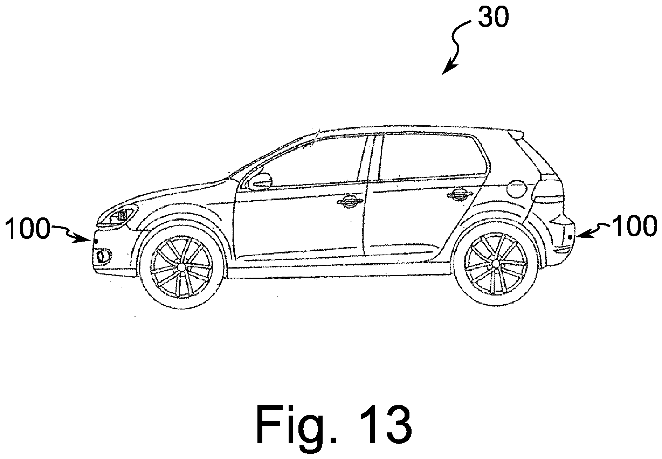

Figure 13 exemplarily depicts in a schematic view a vehicle 30 according to an optional embodiment comprising at least two ultrasonic transducer 100 according to an optional embodiment. At least one of the ultrasonic transducers 100 is integrated into each of the front bumper and the rear bumper of the vehicle 30, respectively, and form part of a parking assistance system of the vehicle 30.

**List of reference signs**

1    conventional housing
2    side wall
3    bottom wall
4    annular projection

| 5 | oscillation generator |
| 10 | housing |
| 12 | side wall |
| 12a | outer surface of the side wall |
| 14 | bottom wall |
| 18 | enhancement structure |
| 20 | structural modification |
| 20a | annular recess |
| 20b | second annular recess |
| 20c | annular protrusion |
| 22 | material modification |
| 24 | enhancement structure of the bottom wall |
| 26 | recesses at the bottom wall |
| 27 | oscillation generator |
| 28 | mounting element |
| 30 | vehicle |
| 100 | ultrasonic transducer |
| 1000 | border between upper and lower part of the housing |
| 1002 | central axis of housing |
| 1004 | displacement direction |
| 1006 | vertical distance of enhancement structure from annular projection |

| 2000 | length of the (cylindrical) side wall |
| 2000a | length section of side wall |
| 2002 | thickness of side wall |
| 2004 | length of annular projection |
| 2006 | diameter of housing |
| 2008 | upper end of side wall |
| 2010 | lower end of side wall |

| F.G. | function generator |
| P.A. | power amplifier |
| U.S. | ultrasonic transducer |
| Mic. | microphone |
| Amp.1 | fist amplifier |
| Amp.2 | second amplifier |
| DAQ | data acquisition card |
| S.P. | ultrasonic wave generator, tweeter |

**Claims**

1. Housing (10) for an ultrasonic transducer (100), the housing (10) comprising

    - a bottom wall (14), which is adapted to act as an oscillation membrane; and
    - an essentially cylindrical side wall (12) extending from the bottom wall (14), wherein the side wall (12) comprises an enhancement structure (18) enhancing the elasticity of the cylindrical side wall (12)
    - an annular projection (4) protruding from the side wall (12) at an end of the side wall (12) opposing the bottom wall (14);
    wherein the enhancement structure (18) comprises a structural modification (20) comprising at least one annular recess (20a) arranged at an outer surface (12a) and/or an inner surface of the side wall (12),
    **characterized in that**
    a distance between the at least one annular recess (20a) and the bottom wall (14) corresponds to at least 10% of the distance between the bottom wall (14) and the annular projection (4).

2. Housing (10) according to claim 1, wherein the distance between the at least one annular recess (20a) and the bottom wall (14) corresponds to at least 15% of the distance between the bottom wall and the annular projection (4); and/or wherein further the distance between the at least one annular recess (20a) and the annular projection (4) corresponds to at least 10% and optionally at least 15% of the distance between the bottom wall and the annular projection.

3. Housing (10) according to any one of the preceding claims, wherein a depth of the annular recess (20a) corresponds to at least 5% and not more than 50% of a thickness of the side wall (12) and optionally at least 10% and not more than 20% of the thickness of the side wall (12); and/or wherein a width of the annular recess (20a) corresponds to at least 5% and not more than 70% of the of the distance between the bottom wall and the annular projection and optionally to at least 20% and not more than 50% of the of the distance between the bottom wall and the annular projection.

4. Housing (10) according to claim 1, wherein the bottom wall (10) and the side wall (12) are formed as a single piece.

5. Housing (10) according to claim 2, wherein the annular recess (20a) extends parallel to the bottom wall (14).

6. Housing (10) according to any one of the preceding claims, wherein the structural modification (20) comprises at least one recess and/or at least one protrusion at an outer surface (12a) and/or an inner surface of the cylindrical side wall (12) extending over not more than 270° of the circumference of the cylindrical side wall (12).

7. Housing (10) according to any one of the preceding claims, wherein the structural modification (20) comprises at least one recess and/or at least one protrusion extending essentially perpendicular to the bottom wall (14).

8. Housing (10) according to any one of the preceding claims, wherein a recess and/or a protrusion of the structural modification (20) has a rectangular and/or triangular and/or polygonal and/or round and/or elliptical cross-sectional shape.

9. Housing (10) according to any one of claims 2 to 6, wherein the housing (10) is essentially made of aluminum.

10. Housing (10) according to any one of the preceding claims, wherein the housing (10) further comprises an enhancement structure (24) enhancing the elasticity of the bottom wall (14).

11. Ultrasonic transducer (100) comprising

   - a housing (10) according to any one of the preceding claims;
   - an oscillation generator (27) attached to the bottom wall (14) of the housing (10) to excite oscillations of the bottom wall (14);
   - a mounting element (28) receiving an upper end of the housing (10), the upper end of the housing (10) facing away from the bottom wall (14) of the housing (10), wherein the mounting element (28) encloses an upper part of the cylindrical side wall (12) and wherein a lower part of the side wall (12) and the bottom wall (14) of the housing (10) protrude from the mounting element (28).

12. Ultrasonic transducer (100) according to claim 11, wherein the enhancement structure (18) comprises a structural modification (20) and/or a material modification (22), which are at least partly located at an outer surface (12a) and/or an inner surface of the lower part of the side wall (12).

13. Vehicle (30) comprising a housing (10) according to any one of claims 1 to 8 and/or an ultrasonic transducer (100) according to claim 12.

14. Use of an enhancement structure (18) enhancing the elasticity of a cylindrical side wall (12) of a housing (10) for an ultrasonic transducer (100) extending from a bottom wall (14) of the housing (10) for increasing a possible oscillation amplitude of the bottom wall of the housing to increase an achievable sound pressure level and/or an achievable sensitivity of the ultrasonic transducer (100), wherein the enhancement structure (18) comprises a structural modification (20) comprising at least one annular recess (20a) arranged at an outer surface (12a) and/or an inner surface of the side wall (12),
**characterized in that**
a distance between the at least one annular recess (20a) and the bottom wall (14) corresponds to at least 10% of the distance between the bottom wall (14) and the annular projection (4).

15. Use according to claim 14, wherein the enhancement structure (18) is adapted to maintain an angular intensity distribution of the ultrasonic transducer (100) unchanged.

16. Method for designing an ultrasonic transducer (100), the method comprising:

- selecting a housing (10) for the ultrasonic transducer (100) having a bottom wall (14), which is adapted to act as an oscillation membrane, and an essentially cylindrical side wall (12) extending from the bottom wall (14);
- calculating a structural modification (20) for the side wall of the housing (10) for enhancing the elasticity of the cylindrical side wall (12) to adjust emission characteristics and/or a sensitivity of the ultrasonic transducer (100), wherein the structural modification (20) comprises at least one annular recess (20a) arranged at an outer surface (12a) and/or an inner surface of the side wall (12),

**characterized in that** $
a distance between the at least one annular recess (20a) and the bottom wall (14) corresponds to at least 10% of the distance between the bottom wall (14) and the annular projection (4).

17. Method for manufacturing a housing (10) for an ultrasonic transducer (100), the method comprising:

- providing a housing (10) for the ultrasonic transducer having a bottom wall (14), which is adapted to act as an oscillation membrane, and an essentially cylindrical side wall (12) extending from the bottom wall (14);
- applying a structural modification (20) to the side wall (12) of the housing (10) for enhancing the elasticity of the cylindrical side wall (12) to adjust emission characteristics and/or a sensitivity of the ultrasonic transducer (100), wherein the structural modification (20) comprises at least one annular recess (20a) arranged at an outer surface (12a) and/or an inner surface of the side wall (12),

**characterized in that** $
a distance between the at least one annular recess (20a) and the bottom wall (14) corresponds to at least 10% of the distance between the bottom wall (14) and the annular projection (4).

18. Method according to any one of claim 16 and 17, wherein the enhancement structure (18) is adapted to maintain a directivity angle of the ultrasonic transducer (100) unchanged.


**Patentansprüche**

1. Gehäuse (10) für einen Ultraschallwandler (100), wobei das Gehäuse (10) Folgendes umfasst:

- eine Bodenwand (14), die dazu eingerichtet ist, als Schwingungsmembran zu wirken; und
- eine im Wesentlichen zylindrische Seitenwand (12), die sich von der Bodenwand (14) erstreckt, wobei die Seitenwand (12) eine Erhöhungsstruktur (18) umfasst, welche die Elastizität der zylindrischen Seitenwand (12) erhöht,
- einen ringförmigen Vorsprung (4), der an einem der Bodenwand (14) entgegengesetzten Ende der Seitenwand (12) von der Seitenwand (12) vorsteht; wobei die Erhöhungsstruktur (18) eine Strukturmodifizierung (20) umfasst, die mindestens eine ringförmige Aussparung (20a) umfasst, die an einer Außenfläche (12a) und/oder einer Innenfläche der Seitenwand (12) angeordnet ist,

**dadurch gekennzeichnet, dass**
die Entfernung zwischen der mindestens einen ringförmigen Aussparung (20a) und der Bodenwand (14) mindestens 10 % der Entfernung zwischen der Bodenwand (14) und dem ringförmigen Vorsprung (4) entspricht.

2. Gehäuse (10) nach Anspruch 1, wobei die Entfernung zwischen der mindestens einen ringförmigen Aussparung (20a) und der Bodenwand (14) mindestens 15 % der Entfernung zwischen der Bodenwand und dem ringförmigen Vorsprung (4) entspricht; und/oder wobei ferner die Entfernung zwischen der mindestens einen ringförmigen Aussparung (20a) und dem ringförmigen Vorsprung (4) mindestens 10 % und optional mindestens 15 % der Entfernung zwischen der Bodenwand und dem ringförmigen Vorsprung entspricht.

3. Gehäuse (10) nach einem der vorstehenden Ansprüche, wobei die Tiefe der ringförmigen Aussparung (20a) mindestens 5 % und höchstens 50 % der Stärke der Seitenwand (12) und optional mindestens 10 % und höchstens 20 % der Stärke der Seitenwand (12) entspricht; und/oder

wobei die Breite der ringförmigen Aussparung (20a) mindestens 5 % und höchstens 70 % der Entfernung zwischen der Bodenwand und dem ringförmigen Vorsprung und optional mindestens 20 % und höchstens 50 % der Entfernung zwischen der Bodenwand und dem ringförmigen Vorsprung entspricht.

**4.** Gehäuse (10) nach Anspruch 1, wobei die Bodenwand (10) und die Seitenwand (12) einstückig ausgebildet sind.

**5.** Gehäuse (10) nach Anspruch 2, wobei sich die ringförmige Aussparung (20a) parallel zur Bodenwand (14) erstreckt.

**6.** Gehäuse (10) nach einem der vorstehenden Ansprüche, wobei die Strukturmodifizierung (20) mindestens eine Aussparung und/oder mindestens einen Vorsprung an einer Außenfläche (12a) und/oder einer Innenfläche der zylindrischen Seitenwand (12), umfasst, die/der sich über höchstens 270° des Umfangs der zylindrischen Seitenwand (12) erstreckt.

**7.** Gehäuse (10) nach einem der vorstehenden Ansprüche, wobei die Strukturmodifizierung (20) mindestens eine Aussparung und/oder mindestens einen Vorsprung umfasst, die/der sich im Wesentlichen senkrecht zur Bodenwand (14) erstreckt.

**8.** Gehäuse (10) nach einem der vorstehenden Ansprüche, wobei eine Aussparung und/oder ein Vorsprung der Strukturmodifizierung (20) eine rechteckige und/oder dreieckige und/oder vieleckige und/oder runde und/oder elliptische Querschnittsform aufweist.

**9.** Gehäuse (10) nach einem der Ansprüche 2 bis 6, wobei das Gehäuse (10) im Wesentlichen aus Aluminium gemacht ist.

**10.** Gehäuse (10) nach einem der vorstehenden Ansprüche, wobei das Gehäuse (10) ferner eine Erhöhungsstruktur (24) umfasst, welche die Elastizität der Bodenwand (14) verstärkt.

**11.** Ultraschallwandler (100), Folgendes umfassend:

- ein Gehäuse (10) nach einem der vorstehenden Ansprüche;
- einen Schwingungserzeuger (27), der an der Bodenwand (14) des Gehäuses (10) befestigt ist, um Schwingungen der Bodenwand (14) zu erregen;
- ein Montageelement (28), das ein oberes Ende des Gehäuses (10) aufnimmt, wobei das obere Ende des Gehäuses (10) von der Bodenwand (14) des Gehäuses (10) abgewandt ist, wobei das Montageelement (28) einen oberen Teil der zylindrischen Seitenwand (12) umschließt und wobei ein unterer Teil der Seitenwand (12) und die Bodenwand (14) des Gehäuses (10) vom Montageelement (28) vorstehen.

**12.** Ultraschallwandler (100) nach Anspruch 11, wobei die Erhöhungsstruktur (18) eine Strukturmodifizierung (20) und/oder eine Materialmodifizierung (22) umfasst, die zumindest teilweise an einer Außenfläche (12a) und/oder einer Innenfläche des unteren Teils der Seitenwand (12) angeordnet sind.

**13.** Fahrzeug (30), umfassend ein Gehäuse (10) nach einem der Ansprüche 1 bis 8 und/oder einen Ultraschallwandler (100) nach Anspruch 12.

**14.** Verwendung einer Erhöhungsstruktur (18), welche die Elastizität einer zylindrischen Seitenwand (12) eines Gehäuses (10) für einen Ultraschallwandler (100) verstärkt, die sich von einer Bodenwand (14) des Gehäuses (10) erstreckt, um eine mögliche Schwingungsamplitude der Bodenwand des Gehäuses zu erhöhen, um einen erreichbaren Schalldruckpegel und/oder eine erreichbare Empfindlichkeit des Ultraschallwandlers (100) zu erhöhen, wobei die Erhöhungsstruktur (18) eine Strukturmodifizierung (20) umfasst, die mindestens eine ringförmige Aussparung (20a) umfasst, die an einer Außenfläche (12a) und/oder einer Innenfläche der Seitenwand (12) angeordnet ist,
**dadurch gekennzeichnet, dass**
die Entfernung zwischen der mindestens einen ringförmigen Aussparung (20a) und der Bodenwand (14) mindestens 10 % der Entfernung zwischen der Bodenwand (14) und dem ringförmigen Vorsprung (4) entspricht.

**15.** Verwendung nach Anspruch 14, wobei die Erhöhungsstruktur (18) dazu eingerichtet ist, die winklige Intensitätsverteilung des Ultraschallwandlers (100) unverändert zu lassen.

**16.** Verfahren zum Designen eines Ultraschallwandlers (100), wobei das Verfahren Folgendes umfasst:

- Auswählen eines Gehäuses (10) für den Ultraschallwandler (100), das eine Bodenwand (14), die dazu eingerichtet ist, als Schwingungsmembran zu wirken, und eine im Wesentlichen zylindrische Seitenwand (12), die sich von der Bodenwand (14) erstreckt, aufweist;
- Berechnen einer Strukturmodifizierung (20) für die Seitenwand des Gehäuses (10) zum Verstärken der Elastizität der zylindrischen Seitenwand (12), um die Emissionseigenschaften und/oder die Empfindlichkeit des Ultraschallwandlers (100) einzustellen, wobei die Strukturmodifizierung (20) mindestens eine ringförmige Aussparung (20a) umfasst, die an einer Außenfläche (12a) und/oder einer Innenfläche der Seitenwand (12) angeordnet ist,

**dadurch gekennzeichnet, dass** die Entfernung zwischen der mindestens einen ringförmigen Aussparung (20a) und der Bodenwand (14) mindestens 10 % der Entfernung zwischen der Bodenwand (14) und dem ringförmigen Vorsprung (4) entspricht.

17. Verfahren zur Herstellung eines Gehäuses (10) für einen Ultraschallwandler (100), wobei das Verfahren Folgendes umfasst:

- Bereitstellen eines Gehäuses (10) für den Ultraschallwandler, das eine Bodenwand (14), die dazu eingerichtet ist, als Schwingungsmembran zu wirken, und eine im Wesentlichen zylindrische Seitenwand (12), die sich von der Bodenwand (14) erstreckt, aufweist;
- Applizieren einer Strukturmodifizierung (20) auf die Seitenwand (12) des Gehäuses (10) zum Verstärken der Elastizität der zylindrischen Seitenwand (12), um die Emissionseigenschaften und/oder die Empfindlichkeit des Ultraschallwandlers (100) einzustellen, wobei die Strukturmodifizierung (20) mindestens eine ringförmige Aussparung (20a) umfasst, die an einer Außenfläche (12a) und/oder einer Innenfläche der Seitenwand (12) angeordnet ist,

**dadurch gekennzeichnet, dass**
die Entfernung zwischen der mindestens einen ringförmigen Aussparung (20a) und der Bodenwand (14) mindestens 10 % der Entfernung zwischen der Bodenwand (14) und dem ringförmigen Vorsprung (4) entspricht.

18. Verfahren nach einem der Ansprüche 16 und 17, wobei die Erhöhungsstruktur (18) dazu eingerichtet ist, den Richtwirkungswinkel des Ultraschallwandlers (100) unverändert zu lassen.

**Revendications**

1. Boîtier (10) pour un transducteur ultrasonore (100), le boîtier (10) comprenant

- une paroi inférieure (14), qui est propre à agir comme une membrane à oscillation ; et
- une paroi latérale (12) essentiellement cylindrique s'étendant à partir de la paroi inférieure (14), la paroi latérale (12) comprenant une structure d'augmentation (18) augmentant l'élasticité de la paroi latérale (12) cylindrique
- une saillie annulaire (4) faisant saillie à partir de la paroi latérale (12) à une extrémité de la paroi latérale (12) à l'opposé de la paroi inférieure (14) ;
la structure d'augmentation (18) comprenant une modification structurelle (20) comprenant au moins un renfoncement annulaire (20a) formé au niveau d'une surface extérieure (12a) et/ou d'une surface intérieure de la paroi latérale (12),
**caractérisé en ce qu'**une distance entre l'au moins un renfoncement annulaire (20a) et la paroi inférieure (14) correspond à au moins 10 % de la distance entre la paroi inférieure (14) et la saillie annulaire (4).

2. Boîtier (10) selon la revendication 1, dans lequel la distance entre l'au moins un renfoncement annulaire (20a) et la paroi inférieure (14) correspond à au moins 15 % de la distance entre la paroi inférieure et la saillie annulaire (4) ; et/ou
dans lequel, en outre, la distance entre l'au moins un renfoncement annulaire (20a) et la saillie annulaire (4) correspond à au moins 10 % et éventuellement à au moins 15 % de la distance entre la paroi inférieure et la saillie annulaire.

3. Boîtier (10) selon l'une quelconque des revendications précédentes, dans lequel une profondeur du renfoncement annulaire (20a) correspond à au moins 5 % et au plus 50 % d'une épaisseur de la paroi latérale (12) et éventuellement à au moins 10 % et au plus 20 % de l'épaisseur de la paroi latérale (12) ; et/ou

dans lequel une largeur du renfoncement annulaire (20a) correspond à au moins 5 % et au plus 70 % de la distance entre la paroi inférieure et la saillie annulaire et éventuellement à au moins 20 % et au plus 50 % de la distance entre la paroi inférieure et la saillie annulaire.

4.  Boîtier (10) selon la revendication 1, dans lequel la paroi inférieure (14) et la paroi latérale (12) sont formées en une seule pièce.

5.  Boîtier (10) selon la revendication 2, dans lequel le renfoncement annulaire (20a) s'étend parallèlement à la paroi inférieure (14).

6.  Boîtier (10) selon l'une quelconque des revendications précédentes, dans lequel la modification structurelle (20) comprend au moins un renfoncement et/ou au moins une saillie au niveau d'une surface extérieure (12a) et/ou d'une surface intérieure de la paroi latérale (12) cylindrique s'étendant sur au plus 270° de la circonférence de la paroi latérale (12) cylindrique.

7.  Boîtier (10) selon l'une quelconque des revendications précédentes, dans lequel la modification structurelle (20) comprend au moins un renfoncement et/ou au moins une saillie s'étendant de manière essentiellement perpendiculaire à la paroi inférieure (14).

8.  Boîtier (10) selon l'une quelconque des revendications précédentes, dans lequel un renfoncement et/ou une saillie de la modification structurelle (20) présente une forme en section transversale rectangulaire et/ou triangulaire et/ou polygonale et/ou ronde et/ou elliptique.

9.  Boîtier (10) selon l'une quelconque des revendications 2 à 6, le boîtier (10) étant composé essentiellement d'aluminium.

10. Boîtier (10) selon l'une quelconque des revendications précédentes, le boîtier (10) comprenant, en outre, une structure d'augmentation (24) augmentant l'élasticité de la paroi inférieure (14).

11. Transducteur ultrasonore (100) comprenant

    - un boîtier (10) selon l'une quelconque des revendications précédentes ;
    - un générateur d'oscillations (27) attaché à la paroi inférieure (14) du boîtier (10) pour provoquer des oscillations de la paroi inférieure (14) ;
    - un élément de fixation (28) recevant une extrémité supérieure du boîtier (10), l'extrémité supérieure du boîtier (10) étant orientée à l'opposé de la paroi inférieure (14) du boîtier (10), l'élément de fixation (28) enveloppant une partie supérieure de la paroi latérale (12) cylindrique et une partie inférieure de la paroi latérale (12) et la paroi inférieure (14) du boîtier (10) faisant saillie à partir de l'élément de fixation (28).

12. Transducteur ultrasonore (100) selon la revendication 11, dans lequel la structure d'augmentation (18) comprend une modification structurelle (20) et/ou une modification de matériau (22), qui sont situées au moins partiellement au niveau d'une surface extérieure (12a) et/ou d'une surface intérieure de la partie inférieure de la paroi latérale (12).

13. Véhicule (30) comprenant un boîtier (10) selon l'une quelconque des revendications 1 à 8 et/ou un transducteur ultrasonore (100) selon la revendication 12.

14. Utilisation d'une structure d'augmentation (18) augmentant l'élasticité d'une paroi latérale (12) cylindrique d'un boîtier (10) pour un transducteur ultrasonore (100) s'étendant à partir d'une paroi inférieure (14) du boîtier (10) pour augmenter une amplitude d'oscillation possible de la paroi inférieure du boîtier afin d'augmenter un niveau de pression acoustique pouvant être atteint et/ou une sensibilité pouvant être atteinte du transducteur ultrasonore (100), la structure d'augmentation (18) comprenant une modification structurelle (20) comprenant au moins un renfoncement annulaire (20a) formé au niveau d'une surface extérieure (12a) et/ou d'une surface intérieure de la paroi latérale (12),
    **caractérisée en ce qu'**une distance entre l'au moins un renfoncement annulaire (20a) et la paroi inférieure (14) correspond à au moins 10 % de la distance entre la paroi inférieure (14) et la saillie annulaire (4).

15. Utilisation selon la revendication 14, la structure d'augmentation (18) étant propre à maintenir une répartition angulaire d'intensité du transducteur ultrasonore (100) inchangée.

**16.** Procédé de conception d'un transducteur ultrasonore (100), le procédé comprenant :

- choisir un boîtier (10) pour le transducteur ultrasonore (100) comportant une paroi inférieure (14), qui est propre à agir comme une membrane à oscillation, et une paroi latérale (12) essentiellement cylindrique s'étendant à partir de la paroi inférieure (14) ;
- calculer une modification structurelle (20) pour la paroi latérale du boîtier (10) pour augmenter l'élasticité de la paroi latérale (12) cylindrique afin d'ajuster des caractéristiques d'émission et/ou une sensibilité du transducteur ultrasonore (100), la modification structurelle (20) comprenant au moins un renfoncement annulaire (20a) formé au niveau d'une surface extérieure (12a) et/ou d'une surface intérieure de la paroi latérale (12),

**caractérisé en ce qu'**une distance entre l'au moins un renfoncement annulaire (20a) et la paroi inférieure (14) correspond à au moins 10 % de la distance entre la paroi inférieure (14) et la saillie annulaire (4).

**17.** Procédé de fabrication d'un boîtier (10) pour un transducteur ultrasonore (100), le procédé comprenant :

- préparer un boîtier (10) pour le transducteur ultrasonore comportant une paroi inférieure (14), qui est propre à agir comme une membrane à oscillation, et une paroi latérale (12) essentiellement cylindrique s'étendant à partir de la paroi inférieure (14) ;
- appliquer une modification structurelle (20) à la paroi latérale (12) du boîtier (10) pour augmenter l'élasticité de la paroi latérale (12) cylindrique afin d'ajuster des caractéristiques d'émission et/ou une sensibilité du transducteur ultrasonore (100), la modification structurelle (20) comprenant au moins un renfoncement annulaire (20a) formé au niveau d'une surface extérieure (12a) et/ou d'une surface intérieure de la paroi latérale (12),

**caractérisé en ce qu'**une distance entre l'au moins un renfoncement annulaire (20a) et la paroi inférieure (14) correspond à au moins 10 % de la distance entre la paroi inférieure (14) et la saillie annulaire (4).

**18.** Procédé selon l'une quelconque des revendications 16 et 17, la structure d'augmentation (18) étant propre à maintenir un angle de directivité du transducteur ultrasonore (100) inchangé.

Fig. 1

Fig. 2A

Fig. 2B

Fig. 2C

Fig. 2D

Fig. 2E

**Fig. 3**

**Fig. 4A**

**Fig. 4B**

Fig. 5A

Fig. 5B

Fig. 5C

4

12

14

2000a

2000

## Fig. 5D

1

2

7.6

ø15.5

## Fig. 5E

14

18

28

10

12

100

Fig. 6

# Fig. 7

# Fig. 8

# Fig. 9

Fig. 10A

Fig. 10B

Fig. 10C

Fig. 10D

4     20a     10

12

## Fig. 10E

4     20a     4     10

12

## Fig. 10F

4     20a     4     10

14     12

## Fig. 10G

4     4     10

12     3     7,6

3,5

20a     2000

## Fig. 10H

F.G.    P.A.    U.S.    Mic.    Amp.1    Amp.2    DAQ

30 cm

$P_{transducer}$

U.S.

30 cm

# Fig. 11

F.G.    P.A.    SP.    U.S.    Amp.1    Amp.2    DAQ

30 cm

$P_{sound}$    $V_{transducer}$

U.S.

# Fig. 12

30

Fig. 13

**REFERENCES CITED IN THE DESCRIPTION**

**Patent documents cited in the description**

- DE 102015015900 B3
- DE 102015015901 B3
- DE 102015015903 B3
- DE 102006028211 A1
- DE 102013211630 A1
- US 6094402 A